Europäisches Patentamt

European Patent Office

Office européen des brevets

(11) Publication number: **0 353 327**
**A1**

# EUROPEAN PATENT APPLICATION

(21) Application number: **88112628.8**

(22) Date of filing: **03.08.88**

(51) Int. Cl.⁴: **G06F 3/02 , G06K 11/06**

(43) Date of publication of application:
**07.02.90 Bulletin 90/06**

(84) Designated Contracting States:
**DE FR GB IT NL SE**

(71) Applicant: **Avila, Harold C.**
**11498 Pierce Street No. AA**
**Riverside California 92505(US)**

Applicant: **Oberg, Arthur E.**
**43 Firwood**
**Irvine California 92714(US)**

(72) Inventor: **Avila, Harold C.**
**11498 Pierce Street No. AA**
**Riverside California 92505(US)**
Inventor: **Oberg, Arthur E.**
**43 Firwood**
**Irvine California 92714(US)**

(74) Representative: **Wagner, Karl H. et al**
**WAGNER & GEYER Patentanwälte**
**Gewuerzmuehlstrasse 5 Postfach 22 14 39**
**D-8000 München 22(DE)**

(54) **Image position control.**

㊄ A control system (1Ø) that undergoes lateral and rotational movement to position an image (6Ø) on the screen (61) of a video monitor (62). A movement detector (64) is interfaced with a microprocessor (63) to detect and interpret the movement of the control system. The control system comprises a body (11) and a bar (12) having a bar axis (23), so that the bar is rotateable with respect to the body about the bar axis and is slideable laterally with respect to the body in a direction parallel to the bar axis. Accordingly, movement of the bar with respect to the body causes a corresponding movement or positioning of the image on the screen.

FIG 1

## IMAGE POSITION CONTROL

### TECHNICAL FIELD

The present invention relates to an image positioning system which undergoes both lateral and rotational movement to position an image (i.e. cursor) on a screen, depending upon the movement of said positioning system. The present invention has particular advantage in microprocessor based apparatus having an associated video display, such as a personal computer, a computer typewriter, and the like.

### BACKGROUND ART

The use of computers having both a video monitor and a keyboard to input and display information are quite common. Many homes have what is typically referred to as a personal computer or a home computer. Home video games are also quite common, as are video arcade games. Most of the foregoing depend upon locating an image (i.e. cursor) on a screen in order to perform a specific function. For example, in what is frequently called a computer typewriter, a cursor is moved on a screen to indicate the location at which a correction is to be made. The cursor may also be used to select a particular mode of operation. A cursor may be moved to draw lines on a screen, commonly called a video display tube. In many of the foregoing, the keyboard is used to provide information to the computer. In some of these applications, swiftness, speed and accuracy are very desirable. For example, in a computer typewriter, the typist generally is trying to type words as fast as possible. Such typing will be displayed on the screen of a video monitor. The typist will try to make corrections as quickly as possible by moving the cursor around the screen.

In the prior art, the cursor movement is accomplished by a device commonly called a mouse. The mouse generally has the shape of a spherical ball which protrudes through the bottom of a housing. Pushing on the mouse will cause the ball to rotate, which in turn will cause an image on the screen to move. The mouse has no inherent up, down, left or right sense of direction, since it is a sphere and can be rotated in any direction. This makes the mouse very difficult to use in a typing situation where the typist is attempting to type as fast as possible while looking at a screen without looking at the mouse. The typist would have to move the mouse in several directions before finally positioning the cursor at the desired coordinates on the screen. Other prior art devices used in computer typewriters include buttons that can be pushed to cause movement of the cursor. For example, one button could be pushed to provide up direction while another button could be pushed to provide down direction, and so forth. The use of bottons does not allow the typist to speed up the process since the movement of the cursor will be either constant or depend on tapping of the button.

Another prior art device for controlling a cursor on a screen is a joy stick that protrudes up from a base. The joy stick is generally moved forward to cause the cursor to move up. The stick is moved to the side to cause the cursor to move to the side, as is commonly done with many home video games.

All of the prior art devices that control the position of an image on a screen are inconvenient to use because, they are remotely located from the keyboard. In particular, where one wishes to draw on a screen, such as a video display tube, by using a cursor as the point of reference, it is very difficult to use a mouse to draw a straight line, because it is difficult to cause a sphere to move in a straight line. It is equally difficult to draw a precise distance using a joy stick or a pushbutton, because one must estimate for how long the stick must be moved to cause a corresponding movement of the cursor for how long the button must be pushed to cause the movement desired. Consequently, it is almost impossible to precisely draw a line of desired length.

Thus, there are positioning systems in the prior art for positioning images on a screen. However, each has obvious disadvantages which are overcome by the invention to be described in this patent application.

### SUMMARY OF THE INVENTION

One object of this invention is to provide a convenient control system for use with keyboards, such as are commonly associated with computers, that would enable a user thereof to quickly develop an instinct and feel for making an image move up, down, left or right on the screen of a video monitor. Another object of this invention is to provide a sensitive and precise control system for positioning an image on a screen. Another object of this invention is to provide a control system that could be used with existing means for detecting the movement of an image on a video minitor screen.

The invention herein is a control system comprising a body and a bar having a bar axis coupled to the body so that the bar is rotateable with respect to the body about the bar axis and is slideable with respect to the body in a direction parallel to the bar axis. Such rotational and linear movement of the bar is used to position an image on a screen.

In a first preferred embodiment, the bar is rotateable with respect to the body only about the bar axis and is slideable with respect to the body only in a direction parallel to the bar axis. In a second embodiment, the bar has a plurality of surfaces that are spaced the same distance from the bar axis.

In a third embodiment, first and second sets of lines are coupled to the bar. The first set of lines are straight and parallel to the bar axis and the second set of lines are perpendicular to the first set of lines. The first and second sets of lines may be printed on paper which in turn may be coupled to the bar.

In another embodiment, a shaft having a shaft axis is coupled to the body. The bar is coupled to the shaft so that the shaft axis is coaxial with the bar axis and the bar is rotateable about and slideable along the shaft.

It is preferably that the bar have an exterior surface having a cylindrical shape and, more particularly, that of a right circular cylinder. As such, the bar can be mated to the body within a notch formed in the body. In the preferred embodiment, the body has a concave surface that defines the notch of the body. Said concave surface is formed with the shape of a right circular cylinder disposed partially around the notch axis wherein the bar can be received.

In other embodiments of the invention, a ball having a spherical surface is coupled to the bar so that the ball rotates when the bar rotates and the ball rotates when the bar slides. A base may be coupled to the body so that the control system can be secured to a keyboard by placing the base under the keyboard.

## BRIEF DESCRIPTION OF THE DRAWINGS

FIG. 1 is a top perspective view of a control system including a body and a cylindrical bar located within a partially cylindrical notch of said body for selectively positioning an image on the screen of a video monitor.

FIG. 2 is a top perspective view of the control system of FIG. 1 with the bar shown above the body for the sake of clarity.

FIG. 3 is a side plan view of the body with the bar removed.

FIG. 4 is the same view as FIG. 3 except that the bar is received within a notch of the body.

FIG. 5 is a fragmentary perspective view of a bar having a plurality of surfaces, according to another embodiment of the invention.

FIG. 6 is a fragmentary perspective view of a bar having first and second sets of lines coupled to the bar, according to yet another embodiment of the invention.

FIG. 7 is a top perspective view of the control system including a movable shaft according to a further embodiment of the invention.

FIG. 8 is a side plan view of the bar shown in FIG. 7.

## DESCRIPTION OF THE PREFERRED EMBODIMENT

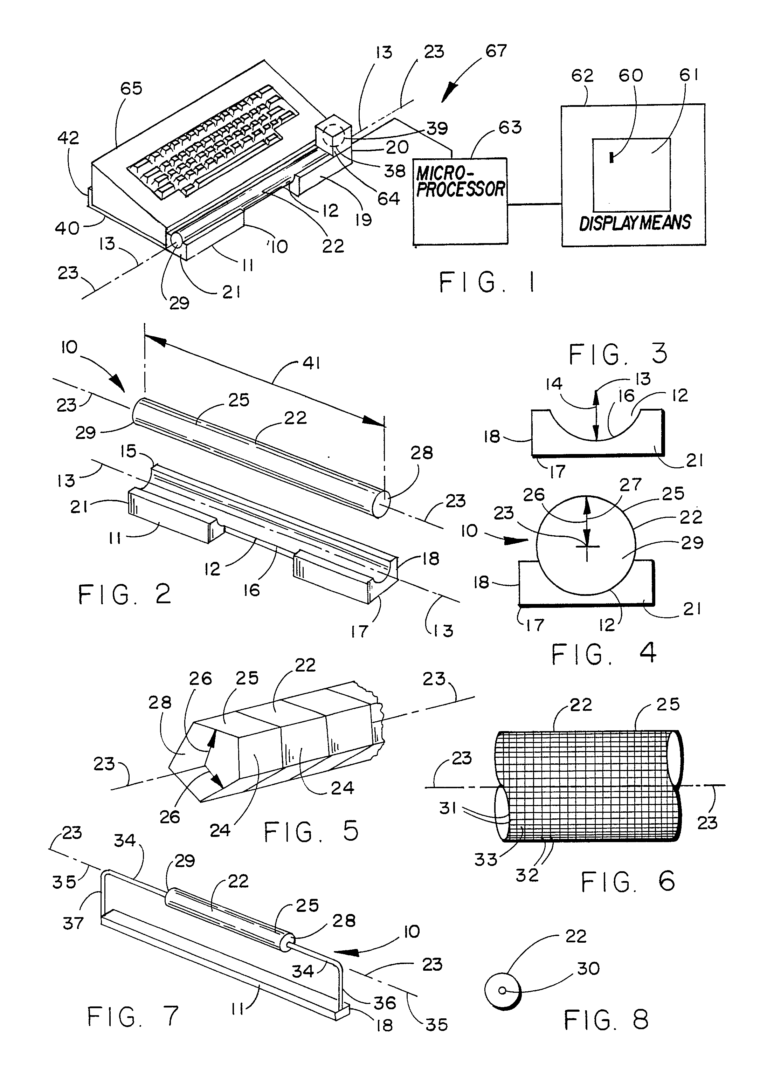

In the embodiment shown in FIG. 1 a positioning system 67 is indicated generally. Positioning system 67 is for positioning an image 6Ø on a screen 61 based upon the movement of a soon to be described control system 1Ø. The positioning system 67 includes detection means 64 for detecting movement of the control system 1Ø and a computer (e.g. microprocessor 63) coupled to the movement detector 64. The microprocessor 63 interprets the movement detected by detector 64. The positioning system 67 further includes a video minitor 62 for displaying the microprocessor's interpretation of movement on a screen 61.

In accordance with the present improvement, positioning system 67 comprises a body 11 and a movable bar 22 having a bar axis 23 so that the bar 22 is rotateable with respect to the body 11 about the bar axis 23 and slideable with respect to the body 11 in a direction parallel to the bar axis 23. Such movement of the bar 22 is used to position an image 6Ø on the screen 61. Thus, the invention herein is a control system 1Ø that uses movement of the bar 22 to position an image 6Ø on the screen 61 of a video minitor 62 for use with a movement detector 64 and a computer or microprocessor 63 that interprets such movement.

A preferred embodiment of the control system 10 is shown in FIGS. 2, 3 and 5. In FIG. 2, the bar 22 is shown above the body 11 for the sake of clarity. In FIG. 3, the left side 21 of the body 11 is shown with the bar 22 removed. In FIG. 4, the left side 21 of the body 11 is shown with the bar 22 in place. In the embodiments shown in FIGS. 1, 2, 3, and 4, the bar 22 is rotateable with respect to the body 11 about the bar axis 23 and is slideable with respect to the body 11 in a direction parallel to the bar axis 23. Accordingly, an image 6Ø can be selectively and advantageously moved on a screen 61 in a straight line over a very precisely determined distance. The movement of the bar 22 parallel to the bar axis 23 will be detected by the movement detector 64, and the microprocessor 63 will be responsive to and interpret the movement detected. Thus, the video monitor 62 will display the movement of image 6Ø in a straight line across screen 61 corresponding to the movement of bar 22 parallel to the bar axis 23. Typically the image 6Ø will move left across screen 61 if the bar 22 is moved to the left and right if the bar is moved to the right.

The length 41 of the bar 22 shown in FIG. 2 should be such that sufficient sensitivity can be obtained. For example, it might be desired to have two millimeters of movement of the bar 22 correspond to one millimeter of movement of the image 6Ø on the screen 61. A bar 22 having a length 41 of 45Ø millimeters would be suitable for many purposes. Using a bar 22 of greater length 41 would increase the sensitivity in that large movement of the bar 22 parallel to the bar axis 23 could cause very small movement of the image 6Ø on the screen 61.

The embodiment where the bar 22 slides in a direction parallel to the bar axis 22 is particularly useful when the video monitor 62 is being used to make a drawing where a line is to be formed along a path that follows image 6Ø across the screen 61. Therefore, straight lines that are only a fraction of a millimeter can be easily drawn on the screen 61 by use of the control system 1Ø.

Making the bar 22 rotateable with respect to the body 11 about the bar axis 23 will allow the use of the control system 1Ø to move an image 60 up and down on the screen 61. That is to say, rotating the bar 22 about the bar axis 23 in one direction can cause the image 6Ø to move down the screen 61, and rotating the bar 22 about the bar axis 23 in the opposite direction can cause the image to move up the screen. A large rotation of the bar 22 about the bar axis 23 can correspond to a very small movement of the image 6Ø on a screen 61. Thus, virtually any desired sensitivity can be obtained by use of the control system 1Ø. The control system 1Ø could even permit one complete rotation of the bar 22 to correspond to a fraction of a millimeter of movement of the image 6Ø on the screen 61. As shown in FIG. 4, for a bar 22 that has a cylindrical shape, a radius 27 of eight to nine millimeters would be suitable for most purposes.

Movement of the bar 22 can be detected in several ways. One suitable movement detector 64 would direct electromagnetic radiation towards the exterior surface 25 of the bar 22 to be partially or totally reflected from the exterior surface 25 towards a suitable sensor (not shown). The embodiment of the bar 22 shown in FIG. 5 has a plurality of surfaces 24 that are of equal distance 26 from the bar axis 23. It is contemplated that movement detector 64 would direct electromagnetic radiation from an associated source thereof to the plurality of surfaces 24 of the bar 22 in a narrow ray so that rotation of the bar 22 would result in some or all of the ray being reflected towards the sensor when the bar 22 was aligned in a particular orientation. Movement of the bar 22 out of its particular orientation would cause the reflected ray to miss the sensor. In this manner, the sensor would receive some, all, or none of a ray each time the bar 22 was precisely positioned in or out of a predetermined orientation. This can be accomplished by having each of the plurality of surfaces 24 of bar 22 being flat and each being the same distance 26 from the bar axis 23.

The embodiment shown in FIG. 5 illustrates a bar 22 that is shaped like a pentagon. Each time one of the five surfaces 24 of the bar 22 is particularly aligned with a radiation source, a ray would be reflected back to a sensor whereby the movement of bar 22 would be detected. Such movement can then be interpreted by the microprocessor 63 with the result of positioning of an image 60 on the screen 61 of video monitor 62. The foregoing technique could be used to move the image 6Ø up or down the screen 61. Similarly, another detector 64 using reflected electromagnetic radiation could sense the lateral sliding of the bar 22 shown in FIG. 5, since the plurality of surfaces could cause an interruption in a reflected ray as the bar 22 slides in a direction parallel to the bar axis 23.

The bar 22 shown in FIG. 5 could be coupled to the body 11 in the same manner as the bar 22 of FIG. 7 is coupled to the body 11 by slidably mounting the bar 22 on a shaft 34 which will be discused hereinafter. The bar 22 shown in FIG. 5 has the shape of a pentagon for the purpose of example only. However, it is preferred that there be a sufficient plurality of surfaces 24 of the bar 22 so that the exterior surface 25 thereof approaches that of a cylinder. This would result in a highly precise and accurate positioning system 67, since a very small movement of the bar 22 would be sufficient to cause a corresponding change in the magnitude of the reflected ray which is received by the sensor of movement detector 64.

In the embodiment of FIG. 6, first and second sets of lines 31 and 32 are coupled to the bar 22. The first set of lines 31 and second set of lines 32 will permit detection of the movement of bar 22 in a manner as previously described when a ray of electromagnetic radiation is directed towards the bar 22 and is reflected by the bar 22 to a sensor, except when the bar 22 is moved so that the ray strikes one of the lines of the first or second sets 31 or 32. Thus, movement of the bar 22 will interrupt the reflection of the ray of electromagnetic radiation to the sensor when such ray strikes one of the lines of the first set of lines 31 or the second set of lines 32. It is preferred that the first set of lines 31 be straight and parallel to the bar axis 23 and the second set of lines 32 be straight and perpendicular to the first set of lines 31. Such an arrangement would simplify the task of detecting the movement of the bar 22.

As previously described, a ray of electromagnetic radiation would be directed to the exterior surface 25 of the bar 22 of FIG. 6 for the purpose of detecting the movement in a direction parallel to the bar axis 23, which movement could be indicated by breaks in the reflected ray of electromagnetic radiation caused by striking any line in the second set of lines 32. Likewise, a second ray of electromagnetic radiation could be directed to the exterior surface 25 of the bar 22 and the reflection of such ray would be interrupted by any line of the first set of lines 31. Thus, lateral movement in a direction parallel to the bar axis 23 can be detected as well as rotational movement of the bar 22 about the bar axis 23. This embodiment would permit the detection of extremely minute movements of the bar 22. The first set of lines 31 and second set of lines 32 could be coupled to the bar 22 by printing the lines on paper 33 and then coupling the paper 33 to the bar 22 by means of a suitable adhesive, such as glue.

In the embodiment of FIGs. 7 and 8, the control system 10 further comprises a shaft 34 having a shaft axis 35 coupled to the body 11, wherein the bar 22 is coupled to the shaft 34 so that the shaft axis 35 is coincident with the bar axis 23 and the bar 22 is both rotateable about and slideable along the shaft 34. As is best shown in FIG. 8, the bar 22 has a hole 30 extending therethrough. The hole 30 should have a shape such that the bar 22 will be able to slide parallel to the bar axis 23 and rotate about the bar axis 23. The shaft 34 should be suspended so that the bar 22 does not make contact with the body 11. This may be accomplished by a left support 37 and right support 36. The shaft 34 and the left and right supports 37 and 36 could be made from a metal rod that is bent in two places. The left support 37 and the right support 36 could be coupled to the body 11 by molding the body 11 with the left support 37 and the right support 36 in place during molding. In this regard, the body 11 could be made from plastic. It is preferred that the hole 30 and the shaft 34 have a cylindrical shape so that the bar 22 can be mated to the shaft 34 yet still rotate and slide relative thereto.

Referring once again to FIGs. 1-4, the bar 22 has an exterior surface 25 having a cylindrical shape. It is preferred that the exterior surface 25 of bar 22 have the shape of a right circular cylinder. It is also preferred that the body 11 have a notch 12 and that the bar 22 be situated in the notch 12. More particularly, the body 11 has a notch axis 13 and an upper side 15 having a concave surface 16 that defines the notch 12. In this embodiment, the concave surface 16 that defines the notch 12 of the body 11 will hold the bar 22. The distance 14 between the notch axis 13 and the concave surface 16 of the body 11 should be essentially equal to the radius 27 of the bar 22 so the bar 22 will mate with the concave surface 16 that defines the notch 12 of the body 11 yet permit the bar 22 to rotate and slide with respect to said concave surface 16. Thus, the notch axis 13 is essentially parallel with the bar axis 23.

Approximately eight to nine millimeters would be suitable for many applications as the distance 14 between the notch axis 13 and the concave surface 16 of the body 11. This distance would also be suitable as the radius 27 of the bar 22. The bar 22 and the concave surface 16 that defines the notch 12 of the body 11 should be made of materials (e.g. plastic) that will permit the sliding and rotating of the bar 22 when the bar 22 is situated in the notch 12 of the body 11. Likewise, it is preferred that the bar 22 be hollow to reduce weight and friction, whereby the bar 22 can be easily slid and rotated.

In FIG. 1, a ball 38 is shown connected to the body 11 adjacent one side thereof, for purposes of illustration. However, it is preferable that the ball 38 be connected to the body 11 so that the ball 38 is half way between the left and right sides 29 and 28 of bar 22. The ball 38 has a spherical surface 39 coupled to the bar 22 so that the bar 22 is in contact with the ball 38 which will cause the ball 38 to rotate when the bar 22 is rotated or slid. Movement of the ball 38 may be detected in a manner similar to that described for detecting of movement of the bar.

A base 40 may be coupled to the body 11 so that the control system 10 can be secured to a keyboard 65 by placing the base 40 under the keyboard 65, as shown in FIG. 1. The base 40 may be coupled to the body 11 by the use of adhesive or other conventional fastening means. It is preferred that the base 40 be flat and relatively thin as to fit under the keyboard 65. The weight of the keyboard 65 on the base 40 should hold the control system 10 in place. An upwardly extending lip 42 may be coupled to the base 40 to further help prevent movement of the base 40. It is preferred that the size and dimensions of the base 40 be approximately the same as the size and dimensions of the keyboard 65. The control system 10 should be positioned against the keyboard 65 so that the rear side 18 of the body 11 is against the keyboard 65, as shown in FIG. 1. Thus, the weight of the keyboard 65 on the base 4Ø and the contact of the rear side 18 of the body 11 with the keyboard 65 will provide for a secure and convenient positioning of the control system 1Ø.

The body 11, as previously indicated, may be made of various materials including plastic. The entire body 11 including the notch 12 may be shaped by using a mold. The ball 38 and base 4Ø may also be made of plastic.

The disadvantages inherent in prior art image positioning systems are overcome by the control system 1Ø of the present invention. First, the control system 1Ø is located close to the keyboard 65 which facilitates access to both. The body 11 is adjacent the keyboard 65 so that the bar 22 is always within the same volume of space with reference to the keyboard 65. Hence, the bar 22 can be easily located without removing one's eyes from the screen 61. Furthermore, because the bar 22 moves laterally and rotationally, two dimensional positioning of an image can be obtained. That is, the image 6Ø can be moved up or down and sideways on the screen 61. The control system 1Ø further conserves space, as it can be located next to the keyboard 65, as shown in FIG. 1. The control system 1Ø can also be connected directly to the keyboard 65 so as to consume virtually no desk space.

It is to be understood that the invention is not limited to the exact details of construction, operation and exact materials as are shown and described, and obvious modifications and equivalents will be apparent to one skilled in the art. Therefore, the invention is to be limited only by the scope of the appended claims.

## Claims

1. A system (67) for selectively and accurately positioning an image (6Ø) on a screen (61), said system characterized by:
video display means (62) having said screen (61) on which said image is to be displayed;
support means (11) having a cradle (16) formed therein;
a bar (22) to be received by said support means at the cradle thereof, such that said bar is adapted for both rotational and lateral movement relative to said support means;
means (64) for detecting the rotational and lateral movement of said bar; and
computer means (63) interconnected between said movement detecting means and said video display means for causing said image (6Ø) to move along said screen in a direction corresponding to the movement of said bar.

2. The positioning system (67) recited in claim 1, further characterized in that said bar (22) has a cylindrical shape and said cradle (16) of said support means (11) has a concave shape, such that said cylindrical bar is received at and movable within the concave cradle of said support means.

3. The positioning system (67) recited in claim 1, further characterized in that said bar (22) has a plurality of flat surfaces (24) extending around the periphery thereof, each of said flat surfaces being spaced an identical distance from the longitudinal axis (23) of said bar.

4. The positioning system (67) recited in claim 1, further characterized by first (31) and second (32) sets of lines formed on said bar (22), said first set of lines being aligned parallel with respect to the longitudinal axis (23) of said bar, and said second set of lines being perpendicularly aligned with respect to said first set of lines.

5. The positioning system (67) recited in claim 1, further characterized in that the cradle of said support means (11) is a shaft (34) extending through a hole (3Ø) in said bar (22), such that said bar is both slidable in a lateral direction (23) along said shaft and rotatable around said shaft for causing said image (6Ø) to correspondingly move along said screen (61).

6. The positioning system (67) recited in claim 5, further characterized by a pair of arms (36,37) for suspending said bar (22) on said shaft (34) above and out of contact with said support means (11).

7. The positioning system (67) recited in claim 1, further characterized by a keyboard (65) and means (4Ø,42) for coupling said keyboard to said support means (11).

8. The positioning system (67) recited in claim 1, further characterized in that said movement detecting means (64) includes a spherical surface (39) coupled to said bar (22) so as to be responsive to the lateral and rotational movement thereof.

9. The positioning system (67) recited in claim 8, wherein said spherical surface (39) is a ball (38).

1Ø. The positioning system (67) recited in claim 1, further characterized in that said computer means (63) is a microprocessor of the type found in a personal computer or a computer controlled typewriter, said microprocessor causing said image (6Ø) to move laterally across said screen (61) when said bar (22) slides back and forth through the cradle (16) of said support means (11), or said microprocessor causing said image to move up and down said screen when said bar is rotated within the cradle of said support means.

FIG. 1

FIG. 2

FIG. 3

FIG. 4

FIG. 5

FIG. 6

FIG. 7

FIG. 8

MICRO-PROCESSOR

DISPLAY MEANS

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 712 101 (CULVER)<br>* Figures 1,2; column 3, line 51 - column 5, line 62 * | 1,5-7,<br>10 | G 06 F 3/02<br>G 06 K 11/06 |
| A | | 2 | |
| | --- | | |
| Y | WO-A-8 706 733 (CULVER)<br>* Figures 1-5a; page 3, lines 1-13; page 4, line 31 - page 5, line 8, lines 16-32; page 6, lines 7-32; page 8, lines 3-10 * | 1,5-7,<br>10 | |
| A | | 2 | |
| | --- | | |
| A | US-A-3 823 616 (HOUSEMAN et al.)<br>* Figures 2-4; column 2, lines 28-34; column 4, line 37 - column 7, line 15 * | 1,2,5,6 | |
| | ----- | | TECHNICAL FIELDS SEARCHED (Int. Cl.4)<br><br>G 06 F 3<br>G 06 K 11 |

| The present search report has been drawn up for all claims | | |
|---|---|---|
| Place of search | Date of completion of the search | Examiner |
| THE HAGUE | 29-03-1989 | WEISS P. |